# EUROPEAN PATENT SPECIFICATION

(11) **EP 2 924 822 B1**
(45) Date of publication and mention of the grant of the patent: **28.11.2018**
(21) Application number: 15158154.3
(22) Date of filing: 09.03.2015
(51) Int. Cl.: H02B 1/30

(54) **Modular cabinet for electrical and electronic equipment**
Modulares Gehäuse für elektrische und elektronische Geräte
Armoire modulaire pour équipement électrique et électronique

(30) Priority: 27.03.2014 IT PN20140018
(43) Date of publication of application: 30.09.2015
(73) Proprietor: Hager-Lumetal S.p.A., 33080 Porcia (PN) (IT)
(72) Inventor: Petris, Antonio, 33080 San Quirino (PN) (IT); Del Santo, Roberto, 33080 Roveredo in Piano (PN) (IT); Castria, Franco, 33080 Prata (PN) (IT); De Benedet, Alberto, 33081 Aviano (PN) (IT); Vendrametto, Maurizio, 33080 Porcia (PN) (IT)
(74) Representative: Cercenà, Alice

(56) References cited:
- EP-A1- 1 587 190
- DE-U- 1 852 161
- DE-U1- 29 713 991

## Description

### TECHNICAL FIELD OF INVENTION

The present invention is relative to a metal modular cabinet for accommodating electrical/electronic equipment and to a method for assembling said cabinet.

### BACKGROUND OF THE INVENTION

In general, a cabinet for accommodating electrical and/or electronic equipment consists of a rigid metal and box-like structure, fabricated for example by providing a support frame formed by a plurality of connected metal elements, to which are associated metal panels to obtain the retaining walls. Cabinets of this type are however rather laborious to assemble because they are made up of a large number of component elements.

Alternatively, modular cabinets are known for electrical/electronic equipment obtained by joining a plurality of panels to each other to form a box-like structure. Although a structure of this type is quite solid, it still requires rather complex processes and thus must be brought to its place of installation already preassembled, with the consequent cumbersome and costly problems connected with its transportation.

The US5713649 document discloses a cabinet made by assembling a plurality of modular panels. Said modular panels each have a flat end and a folded opposite end, the latter being capable of overlapping the flat end of the adjacent panel so as to connect the two panels at a right angle. The stable connection between the two panels is achieved thanks to the insertion of fastening means into corresponding holes provided on both the folded end of a panel and on the flat end of the adjacent panel.

The connection of four modular panels thus forms the structure of lateral walls of the cabinet, to which can be associated other panels to form the bottom wall and a front door, preferably hinged on one side.

Although the modular panels that form the cabinet can be easily packaged and carried to their place of installation, the subsequent assembly process to obtain a sturdy and rigid container is laborious and time consuming, as it requires the use of a plurality of fastening means that must be suitably positioned and tightened with appropriate tools.

Moreover, once the size of the panels is determined, it is not possible to customize the dimensions of the cabinet; thus it is necessary to produce and hold in stock a plurality of panels of different sizes so as to be able to provide cabinets of different dimensions.

Document EP1587190 discloses an electrical cabinet formed by modular panels, each of them having two pairs of opposing edges with plug-in receptacles and insertion slots adapted to cooperate by insertion to obtain the connection between adjacent panels. However, when said two adjacent modular panels are connected together, in the region of the plug-in receptacles and insertion slots a further step of joint reinforcement by welding is required.

### SUMMARY OF THE INVENTION

The main objective of the subject matter of the present invention is to overcome the drawbacks of the prior art by devising a cabinet for accommodating electrical/electronic equipment, said cabinet being formed with modular panels, rapidly and immediately assembled without requiring external fastening means, and being at the same time provided with the qualities of strength and stability required for their specific application.

In the scope of the above objective, an important purpose is to devise a cabinet for accommodating electrical/electronic equipment, said cabinet being modular in its width, length and depth extensions, being largely customizable on the basis of the requirements of the user.

One not secondary purpose of the present invention is to provide a cabinet for electrical/electronic equipment that can be obtained by employing the usual well-known plants, machinery and equipment.

The above task, purposes and advantages, as well as others that will become more evident in the following description, are achieved with a cabinet as defined in claim 1 and an assembling method as considered in claim 9.

### BRIEF DESCRIPTION OF THE FIGURES

The advantages and advantageous characteristics of a cabinet for accommodating electrical/electronic equipment according to the present invention will be better illustrated in the description of particular, but not exclusive, embodiments shown by way of non-limiting examples in the accompanying drawings, in which:
- figures 1A and 1B illustrate, in a perspective view and a front view, respectively, a modular panel suitable to build a cabinet according to the present invention;
- figures 1C and 1D illustrate the circled details of figure 1B suitably enlarged;
- figure 1E illustrates the circled detail of figure 1A suitably enlarged;
- figure 2A is an enlarged detail illustrating the step of coupling two adjacent modular panels for building a cabinet according to the present invention;
- figure 2B is an enlarged detail that illustrates the two adjacent panels of figure 2A when stably coupled to each other;
- figure 3 is a perspective view illustrating a step in the construction of a basic box-like structure of a cabinet according to the invention;
- figure 4 illustrates a pair of box-like structures according to the present invention, installed on top of one another so as to increase the overall depth of the cabinet, and
- figure 5 illustrates, in a perspective view, three box-like structures according to the present invention, suitably connected to increase the overall dimensions of the cabinet.

### DETAILED DESCRIPTION OF THE EMBODIMENTS OF THE INVENTION

As will be explained below in greater detail, a cabinet 1 for accommodating electrical/electronic equipment according to the present invention comprises at least a base box-like structure, obtainable by joining together at least four modular panels 10, preferably metallic, connected at perpendicular planes at their respective ends.

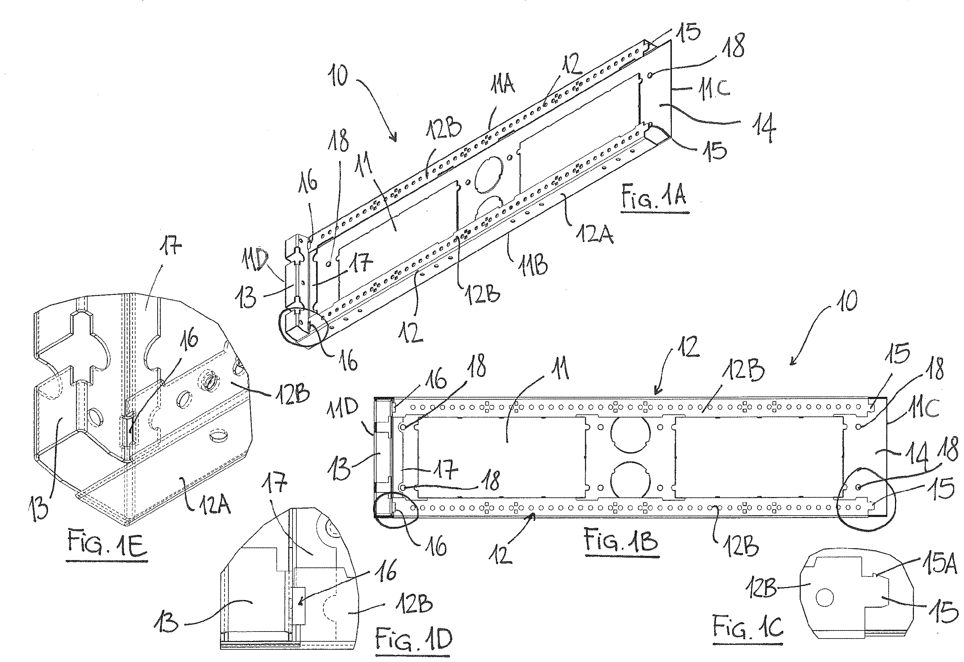

As can be seen in figures 1A and 1B, each of said panels 10 comprises a substantially flat and preferably metallic plate 11, defined by a first pair of opposite essentially parallel edge portions 11A, 11B and a second pair of opposite edge portions 11C, 11D, also substantially parallel.

According to an advantageous characteristic of the present invention, each of said panels 10 comprises retaining means 12 and engaging means 13, configured so that the retaining means 12 of a first panel 10 cooperate by elastic strain with the corresponding engaging means 13 of a second panel 10, adjacent to said first panel, to obtain the connection between said two panels.

In particular, said retaining means 12 comprise advantageously L-shaped portions, associated with said first pair of opposing edge portions 11A, 11B of said plate 11 arranged so as to face each other.

Said L-shaped portions 12 preferably comprise a first retaining wall 12A that rises from the corresponding edge portion on a plane perpendicular to the lying position of said plate 11, and a second retaining wall 12B, connected to said first retaining wall 12A, extending along a plane parallel to the lying position of said plate 11, so as to substantially form an L shape. Said second retaining walls 12B face each other and both extend toward the centre of the plate 11.

Advantageously, said L-shaped portions 12 can be formed by suitably folding the corresponding edge portions 11A, 11B of the flat plate 11.

Preferably, toward the first edge portion 11C of said second pair of edge portions 11C, 11D, said plate 11 extends beyond the end margin of said L-shaped portions 12 to form a flat extension portion 14.

Advantageously, said retaining means 12 also comprise at least a pair of tabs 15 extending beyond the end edge of said L-shaped portions 12 turned toward said extension portion 14, that is, toward said first edge portion 11C, said tabs 15 being substantially coplanar with said second retaining wall 12B. Further, as can be seen in figure 1C, each of said tabs 15 is advantageously provided with an engaging tooth 15A, projecting sideways from the body of said tab 15.

At the other end, said engaging means 13 comprise a portion projecting with respect to the surface of said plate 11, preferably formed from a hollow section arranged so as to extend from said L-shaped portions 12 along a second edge portion 11D of said second pair of edge portions 11C, 11D, in particular the edge portion opposite to the one toward which said tabs 15 project.

Advantageously, said hollow engaging means 13 can be obtained by folding the corresponding second edge portion 11 D of the flat plate 11.

Said engaging means also comprise at least a pair of openings 16, preferably slot-shaped, obtained substantially at the point where said L-shaped portions 12 meet said hollow section 13, as shown in figures 1D and 1E.

According to an advantageous characteristic of the invention, the tabs 15 of a first panel 10 are adapted to cooperate slidingly with the openings 16 of an adjacent panel 10 to obtain the connection between the two panels 10; the firm connection between two adjacent panels 10 is obtained when the engaging teeth 15A of each tab 15 snap fit within the corresponding openings 16. Said engaging teeth 15A are in fact shaped so as to allow them to be slidably inserted by elastic deformation into the openings 16 and, once inserted in place, to prevent them from being extracted.

If necessary, a reinforcing element 17, extending between said L-shaped portions 12, can be arranged in proximity to said hollow engaging means 13, so as to lend a greater rigidity to the panel 10 around said openings 16.

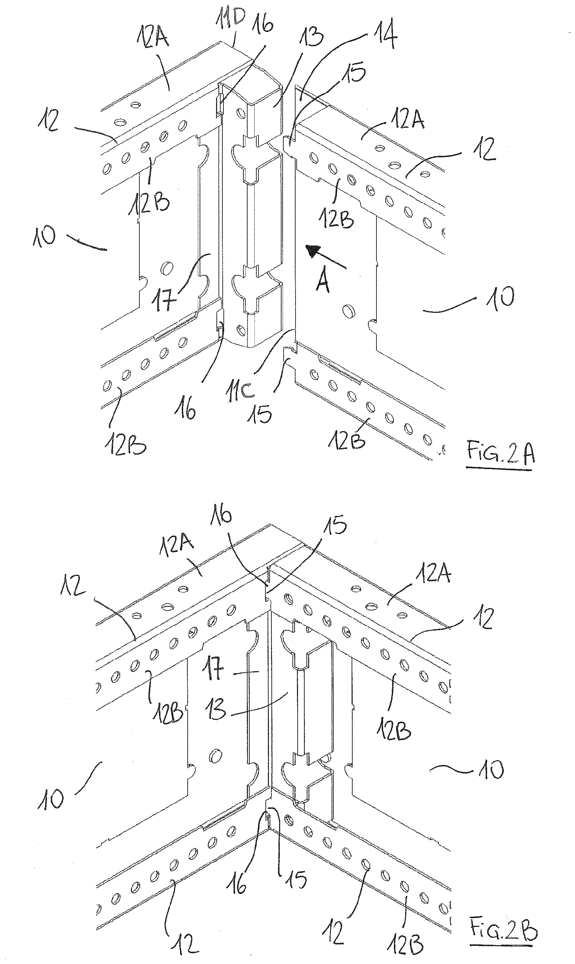

**As** can be seen in figure 2A, the connection between a first panel 10 and a second panel 10, adjacent to the first, is carried out by prearranging the end portion 11C of said first panel 10 next to the second end portion 11 D of said second panel 10, so that said two panels 10 lie on planes perpendicular to each other.

**At** this point, in order to achieve a firm connection, it is necessary to apply a force in the direction of the arrow A in figure 2A, so that said hollow engaging section 13 is engaged under said L-shaped portions 12, and deforms them by elastic strain. In other words, the L-shaped portions of a first panel 10 are adapted to receive and hold by elastic strain the hollow element 13 of a second panel 10 adjacent to the first, as shown in figure 2B.

Advantageously, when assembling two adjacent panels 10, the slotted openings 16 of the first panel 10 are adapted to slidingly receive the tabs 15 of the adjacent panel 10; the firm connection is achieved when the teeth 15A of each tab 15 snap fit within a corresponding slotted opening 16, as shown in figure 2B

The insertion of said tabs 15 within the corresponding openings 16 also lends considerable rigidity to the joint and a greater shear resistance to the whole structure.

A method for assembling a cabinet 1 according to the present invention therefore comprises the following steps:
a) providing at least four panels 10, each of said panels comprising retaining means 12 associated with a first pair of opposite edge portions 11A, 11B and engaging means 13 associated with an edge portion 11D of a second pair of edge portions 11C, 11D;
b) coupling a first panel 10 to an adjacent panel, abutting them at perpendicular planes at respective opposite edge portions, and applying a force such that said engaging means 13 of a first panel 10 deform by elastic strain and engage said retaining means 12 of the adjacent panel, and
c) repeat the operations of step b) so as to obtain a basic box-like structure.

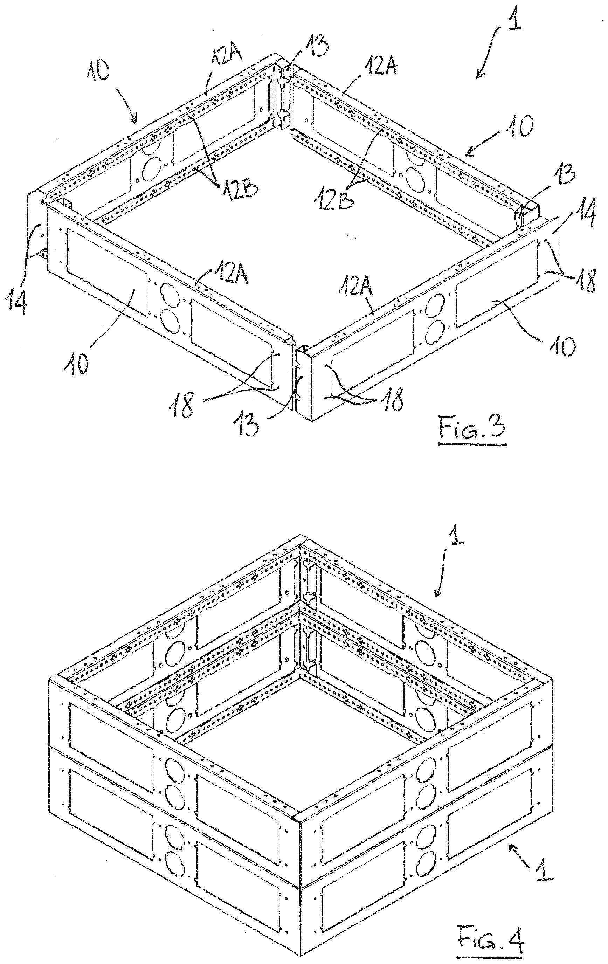

**As** can be seen in figure 3, the connection of at least four modular panels 10 following the procedures illustrated above makes it possible to obtain a basic box-like structure that forms the essential module for the construction of a cabinet 1 according to the present invention.

According to a rather advantageous characteristic of the present invention, said first and second retaining walls 12A, 12B forming the L-shaped portions 12 are both provided with a plurality of holes, variably and appropriately arranged, suitable to receive fastening means to modify the basic box-like structure as may be required.

Essentially, for each panel 10 making up said basic box-like structure, said first and second retaining walls 12A, 12B are thus functional/operational surfaces thanks to which it is possible to modulate in various ways the basic box-like structure or to create internal partitions in order to achieve a more rational use of the available space.

For example, thanks to the holes provided on the first retaining wall 12A, it is possible to associate to a basic box-like structure, obtained as described above, a bottom wall and possibly a door, suitably hinged on the front part of the cabinet 1.

Or, advantageously, it is possible to increase the overall depth of the cabinet 1 by stacking two or more identical basic box-like structures, fastening them with suitable fastening means, such as for example screws, inserted into the holes present on said first retaining walls 12A, as shown in figure 4 so as to enlarge the overall storage capacity of the cabinet 1.

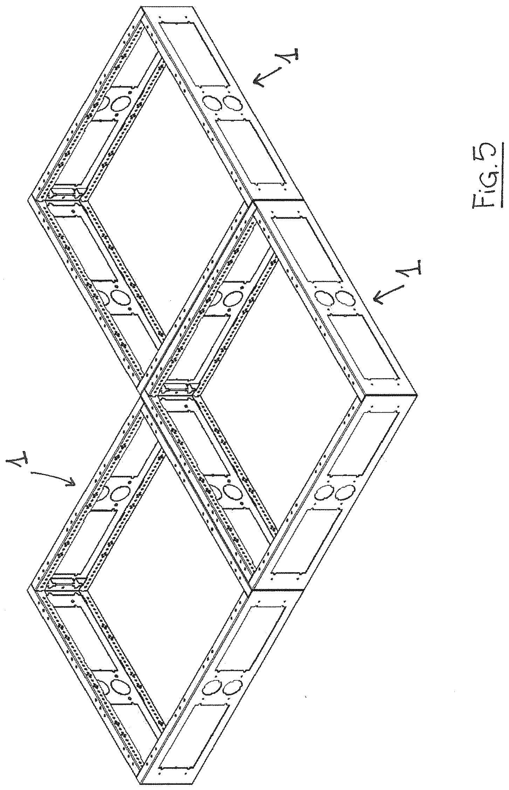

Moreover, as can be seen in figure 5, each panel 10 forming said basic box-like structure can be associated with a panel 10 making up another box-like structure arranged adjacently thereto, so as to also extend the modularity of the cabinet in the two directions of the plane; for this purpose, each panel 10 may include suitable through holes 18 adapted to be crossed by corresponding fastening means so as to obtain the connection between two adjacent box-like structures.

In conclusion, from the above it is evident that the present invention achieves the initially foreseen purposes and advantages. In effect, a cabinet 1 for accommodating electrical and/or electronic equipment was devised to be built from modular panels 10 that can be immediately and rapidly assembled without requiring the use of external fastening means.

The use of modular panels and the absence of fastening means to assemble them make it possible to considerably simplify the steps of production as well as to reduce the number of necessary components.

In addition, thanks to this characteristic, a cabinet according to the present invention can be advantageously marketed and/or carried to the place of installation completely disassembled, with obvious advantages in terms of dimensions and of consequent costs.

Even so, the assembling of the modular panels 10, that is attained through the elastic strain of retaining means, lends to a cabinet according to the present invention the sturdiness and stability required for its specific uses.

Advantageously, the cabinet 1 obtained by assembling at least four modular panels 10 is itself modular in its width, length and depth dimensions, and thus capable of being personalized and implemented to meet customer requirements.

**In** addition, the internal space defined by the cabinet 1 can also be further utilized through the creation of internal partitions that can be easily mounted on the plurality of operating/functional surfaces provided in it.

In the above description, terms such as "on", "under", "top", "bottom, "high", "low" or similar terms refer to a cabinet 1 and to modular panels 10 that compose it in their normal operating arrangement, that is, when in use, as illustrated in the accompanying figures.

Naturally, the invention is susceptible of numerous modifications or variants without thereby departing from the scope of patent protection of the present invention as defined in any of the enclosed claims. Further, the materials used to implement the present invention, as well as the shapes and dimensions of the individual components, can be the most suitable to meet the specific requirements.

## Claims

1. Cabinet (1) for accommodating electric or electronic equipment, said cabinet (1) being formed by at least four metal modular panels (10) each comprising a flat plate (11) defined by a first pair of opposed edge portions (11A, 11B) and a second pair of opposed edge portions (11C, 11D), said panels (10) being connectable perpendicularly to each other to form a box-like structure,
**characterized in that**
each of said panels (10) comprises retaining means (12) associated with said first pair of opposed edge portions (11A, 11B), and engaging means (13) associated with one edge portion (11D) of said second pair of edge portions (11C, 11D), said retaining means (12) of a first panel (10) being configured so as to cooperate by means of elastic strain with corresponding engaging means (13) of a second panel (10), adjacent to said first panel, said corresponding engaging means (13) configured to deform said retaining means (12) by elastic strain to obtain the connection between said two panels, without requiring the use of external fastening means.

2. Cabinet (1) according to claim 1, wherein said retaining means (12) comprise L-shaped portions (12) arranged facing to each other and formed by a first retaining wall (12A), rising perpendicularly from the corresponding edge portion with respect to the plane whereon said flat plate (11) lies, and a second retaining wall (12B), connected to said first retaining wall (12A), extending towards the center of the plate (11) on a plane parallel with respect to the plane whereon said flat plate (11) lies.

3. Cabinet (1) according to claim 2, wherein said engaging means (13) comprise an engaging portion protruding from said plate (11) and having a hollow section, said engaging portion (13) being disposed so as to extend between said L-shaped portions (12).

4. Cabinet (1) according to claim 2 or 3, wherein said L-shaped portions (12) are obtained by folding said plate (11) along said first pair of opposed edge portions (11A, 11B) and said engaging portion (13) is obtained by folding an edge portion (11D) of said second pair or opposed edge portions (11C, 11D).

5. Cabinet (1) according to claim 3 or 4, wherein at least a pair of tabs (15) arranged coplanar to said retaining second walls (12B) extends from the lateral ends of said L-shaped portions (12) towards an edge portion (11C) opposite to the edge portion (11D) where said engaging portion (13) is arranged, corresponding openings (16) being obtained on said L-shaped portions (12) where said L-shaped portions (12) contact said engaging portion (13), said openings (16) of a first panel (10) being configured such that to receive said tabs (15) of an adjacent second panel (10) so as to guide the coupling of said first and second panels (10) on perpendicular planes.

6. Cabinet (1) according to claim 5, wherein each of said tabs (15) is provided with an engaging tooth (15A) suitable to snap fit within a corresponding opening (16) to firmly retain the connection between two adjacent panels (10).

7. Cabinet (1) according to any one of claims 2 to 6, wherein said first and said second retaining walls (12A, 12B) are provided with a plurality of holes, wherein the holes provided on said first retaining walls (12A) are adapted to allow the overlap of other box-like structures to increase the overall depth of said cabinet (1), and wherein the holes provided on said second retaining walls (12B) are adapted to allow the mounting of internal partition walls.

8. Cabinet (1) according to any one of claims 1 to 7, wherein said plates (11) of each panels (10) forming a first box-like structure are provided with a plurality of holes (18) arranged so as to allow the coupling with plates (11) of panels (10) forming other box-like structures to laterally expand the storage capacity of said cabinet (1).

9. A method for assembling a cabinet (1) for accommodating electric or electronic equipment according to claim 1, **characterized by** comprising the following steps:
a) providing at least four modular panels (10), each of said panels (10) comprising retaining means (12) associated with a first pair of opposite edge portions (11A, 11B), and engaging means (13) associated with an edge portion (11D) of a second pair of edge portions (11C, 11D);
b) coupling a first panel (10) to a second panel (10), adjacent said first panel, arranging the respective opposite edge portions perpendicularly to each other so that said retaining means (12) of the first panel cooperate through elastic strain with said engagement means (13) of the adjacent panel;
c) repeating said step b) so as to obtain of a box-like structure.

## Patentansprüche

1. Gehäuse (1) zum Aufnehmen elektrischer oder elektronischer Einrichtungen, wobei das Gehäuse (1) aus wenigstens vier modularen Verkleidungen (10) aus Metall besteht, die jeweils eine flache Platte (11) umfassen, die durch ein erstes Paar einander gegenüberliegender Kantenabschnitte (11A, 11B) sowie ein zweites Paar einander gegenüberliegender Kantenabschnitte (11C, 11D) gebildet wird, und die Verkleidungen (10) senkrecht zueinander verbunden werden können, um eine kastenartige Struktur herzustellen,
**dadurch gekennzeichnet, dass**
jede der Verkleidungen (10) Halteeinrichtungen (12), die mit dem ersten Paar einander gegenüberliegender Kantenabschnitte (11A, 11B) verbunden sind, und Eingriffseinrichtungen (13) umfasst, die mit einem Kantenabschnitt (11D) des zweiten Paars von Kantenabschnitten (11C, 11D) verbunden sind, wobei die Halteeinrichtungen (12) einer ersten Verkleidung (10) so ausgeführt sind, dass sie mittels elastischer Dehnung mit entsprechenden Eingriffseinrichtungen (13) einer an die erste Verkleidung angrenzenden zweiten Verkleidung (10) zusammenwirken, und die entsprechenden Eingriffseinrichtungen (13) so ausgeführt sind, dass sie die Halteeinrichtungen (12) mittels elastischer Dehnung verformen, um die Verbindung zwischen den zwei Verkleidungen herzustellen, ohne dass der Einsatz äußerer Befestigungseinrichtungen erforderlich ist.

2. Gehäuse (1) nach Anspruch 1, wobei die Halteeinrichtungen (12) L-förmige Abschnitte (12) umfassen, die einander zugewandt angeordnet sind und durch eine erste Halte-Wand (12A), die in Bezug auf die Ebene, in der die flache Platte (11) liegt, senkrecht von dem entsprechenden Kantenabschnitt nach oben ansteigt, sowie eine zweite Halte-Wand (12B) gebildet wird, die mit der ersten Halte-Wand (12A) verbunden ist und sich in einer Ebene parallel in Bezug auf die Ebene, in der die flache Platte (11) liegt, auf die Mitte der Platte (11) zu erstreckt.

3. Gehäuse (1) nach Anspruch 2, wobei die Eingriffseinrichtungen (13) einen Eingriffsabschnitt umfassen, der von der Platte (11) vorsteht und einen hohlen Querschnitt hat, wobei der Eingriffsabschnitt (13) so angeordnet ist, dass er sich zwischen den L-förmigen Abschnitten (12) erstreckt.

4. Gehäuse (1) nach Anspruch 2 oder 3, wobei die L-förmigen Abschnitte (12) ausgebildet werden, indem die Platte (11) an dem ersten Paar einander gegenüberliegender Kantenabschnitte (11A, 11B) gebogen wird, und der Eingriffsabschnitt (13) ausgebildet wird, indem ein Kantenabschnitt (11D) des zweiten Paars einander gegenüberliegender Kantenabschnitte (11C, 11D) gebogen wird.

5. Gehäuse (1) nach Anspruch 3 oder 4, wobei wenigstens ein Paar Laschen (15), die koplanar zu den zweiten Halte-Wänden (12B) angeordnet sind, sich von den Längsenden der L-förmigen Abschnitte (12) auf einen Kantenabschnitt (11C) zu erstrecken, der dem Kantenabschnitt (11D) gegenüberliegt, an dem der Eingriffsabschnitt (13) angeordnet ist, entsprechende Öffnungen (16) an den L-förmigen Abschnitten (12) ausgebildet sind, an denen die L-förmigen Abschnitte (12) mit dem Eingriffsabschnitt (13) in Kontakt kommen, wobei die Öffnungen (16) einer ersten Verkleidung (10) so ausgeführt sind, dass sie die Laschen (15) einer angrenzenden zweiten Verkleidung (10) aufnehmen und so das Koppeln der ersten und der zweiten Verkleidung (10) in senkrechten Ebenen führen.

6. Gehäuse (1) nach Anspruch 5, wobei jede der Laschen (15) mit einem Eingriffs-Zahn (15A) versehen ist, der dazu geeignet ist, in einer entsprechenden Öffnung (16) einzurasten, um die Verbindung zwischen zwei aneinandergrenzenden Verkleidungen (10) fest zu halten.

7. Gehäuse (1) nach einem der Ansprüche 2 bis 6, wobei die ersten und zweiten Halte-Wände (12A, 12B) mit einer Vielzahl von Löchern versehen sind, die an den ersten Halte-Wänden (12A) vorhandenen Löcher so eingerichtet sind, dass sie zulassen, dass durch die Überlappung anderer kastenartiger Strukturen die Gesamttiefe des Gehäuses (1) zunimmt, und die an den zweiten Halte-Wänden (12B) vorhandenen Löcher so eingerichtet sind, dass sie das Anbringen innerer Trennwände zulassen.

8. Gehäuse (1) nach einem der Ansprüche 1 bis 7, wobei die Platten (11) jeder der Verkleidungen (10), die eine erste kastenartige Struktur bilden, mit einer Vielzahl von Löchern (18) versehen sind, die so angeordnet sind, dass sie das Koppeln mit Platten (11) von Verkleidungen (10) zulassen, die andere kastenartige Strukturen bilden, um die Aufnahmekapazität des Gehäuses (1) in Längsrichtung zu erweitern.

9. Verfahren zum Montieren eines Gehäuses (1) zum Aufnehmen elektrischer oder elektronischer Einrichtungen nach Anspruch 1, **dadurch gekennzeichnet, dass** es die folgenden Schritte umfasst:
a) Bereitstellen wenigstens vier modularer Verkleidungen (10), wobei jede der Verkleidungen (10) Halteeinrichtungen (12), die mit einem ersten Paar einander gegenüberliegender Kantenabschnitte (11A, 11B) verbunden sind, sowie Eingriffseinrichtungen (13) umfasst, die mit einem Kantenabschnitt (11D) eines zweiten Paars von Kantenabschnitten (11C, 11D) verbunden sind;
b) Koppeln einer ersten Verkleidung (10) mit einer an die erste Verkleidung angrenzenden zweiten Verkleidung (10), Anordnen der jeweiligen einander gegenüberliegenden Kantenabschnitte senkrecht zueinander, so dass die Haltereinrichtungen (12) der ersten Verkleidung über elastische Dehnung mit den Eingriffseinrichtungen (13) der angrenzenden Verkleidung zusammenwirken;
c) Wiederholen des Schrittes b), um so eine kastenartige Struktur auszubilden.

## Revendications

1. Armoire (1) pour un équipement électrique ou électronique, ladite armoire (1) étant formée d'au moins quatre panneaux (10) modulaires métalliques comprenant chacun une plaque (11) plate définie par une première paire de parties de bord opposées (11A, 11B) et une seconde paire de parties de bord opposées (11C, 11D), lesdits panneaux (10) pouvant être connectés perpendiculairement l'un à l'autre pour former une structure en forme de boîte, **caractérisée en ce que**
chacun desdits panneaux (10) comprend des moyens de retenue (12) associés à ladite première paire de parties de bord opposées (11A, 11B) et à des moyens de mise en prise (13) associés à une partie de bord (11D) de ladite seconde paire de parties de bord opposées (11C, 11D), lesdits moyens de retenue (12) d'un premier panneau (10) étant configurés de manière à coopérer au moyen d'une contrainte élastique avec des moyens de mise en prise (13) correspondants d'un second panneau (10), adjacent audit premier panneau, lesdits moyens de mise en prise (13) correspondants étant configurés pour déformer lesdits moyens de retenue (12) par contrainte élastique pour obtenir la connexion entre lesdits deux panneaux, sans nécessiter l'emploi de moyens extérieurs de fixation.

2. Armoire (1) selon la revendication 1, dans laquelle lesdits moyens de retenue (12) comprennent des parties en forme de L (12) disposées de manière à se faire face les unes aux autres et formées par une première paroi de retenue (12A), s'élevant perpendiculairement à partir de la partie de bord correspondante par rapport au plan sur lequel repose ladite plaque (11) plate, et une seconde paroi de retenue (12B), reliée à ladite première paroi de retenue (12A), s'étendant vers le centre de la plaque (11) dans un plan parallèle à celui sur lequel la plaque (11) plate repose.

3. Armoire (1) selon la revendication 2, dans laquelle lesdits moyens de mise en prise (13) comprennent une partie de mise en prise faisant saillie de ladite plaque (11) et ayant une section creuse, ladite partie de mise en prise (13) étant disposée de manière à s'étendre entre lesdites parties en forme de L (12).

4. Armoire (1) selon la revendication 2 ou 3, dans laquelle lesdites parties en forme de L (12) sont obtenues en pliant ladite plaque (11) le long de ladite première paire de parties de bord opposées (11A, 11B) et ladite partie d'engagement (13) est obtenue en pliant une partie de bord (11D) de ladite seconde paire de parties de bord opposées (11C, 11D).

5. Armoire (1) selon la revendication 3 ou 4, dans laquelle au moins une paire de pattes (15) agencées de manière coplanaire auxdites secondes parois de retenue (12B) s'étend depuis les extrémités latérales desdites parties en forme de L (12) vers une partie de bord (11C) opposée à la partie de bord (11D) où est disposée ladite partie de mise en prise (13), des ouvertures (16) correspondantes étant obtenues sur lesdites parties en forme de L (12) où lesdites parties en forme de L (12) entrent en contact avec ladite partie de mise en prise (13), lesdites ouvertures (16) d'un premier panneau (10) étant configurées de manière à recevoir lesdites pattes (15) d'un second panneau (10) adjacent de manière à guider le couplage desdits premier et second panneaux (10) à des plans perpendiculaires.

6. Armoire (1) selon la revendication 5, dans laquelle chacune desdites pattes (15) est munie d'une dent de prise (15A) appropriée pour s'emboîter dans une ouverture (16) correspondante afin de maintenir fermement la connexion entre deux panneaux (10) adjacents.

7. Armoire (1) selon l'une quelconque des revendications 2 à 6, dans laquelle lesdites première et seconde parois de retenue (12A, 12B) sont munies d'une pluralité de trous, dans laquelle les trous prévus sur lesdites premières parois de retenue (12A) sont adaptés pour permettre le chevauchement d'autres structures en forme de boîte pour augmenter la profondeur totale de ladite armoire (1), et dans laquelle les trous prévus sur lesdites secondes parois de retenue (12B) sont adaptés pour permettre le montage de parois de séparation internes.

8. Armoire (1) selon l'une quelconque des revendications 1 à 7, dans laquelle lesdites plaques (11) de chacun des panneaux (10) formant une première structure en forme de boîte sont pourvues d'une pluralité de trous (18) agencés de manière à permettre le couplage avec des plaques (11) de panneaux (10) formant d'autres structures en forme de boîte pour augmenter latéralement la capacité de stockage de ladite armoire (1).

9. Procédé pour assembler une armoire (1) destinée à recevoir un équipement électrique ou électronique selon la revendication 1, **caractérisé en ce qu'**il comprend les étapes suivantes:
a) fournir au moins quatre panneaux (10) modulaires, chacun desdits panneaux (10) comprenant des moyens de retenue (12) associés à une première paire de parties de bord opposées (11A, 11B) et des moyens de mise en prise (13) associés à une partie de bord (11D) d'une seconde paire de parties de bord (11C, 11D);
b) coupler un premier panneau (10) à un second panneau (10), adjacent audit premier panneau, en agençant les parties de bord opposées respectives perpendiculairement les unes aux autres de sorte que lesdits moyens de retenue (12) du premier panneau coopèrent par contrainte élastique avec lesdits moyens de mise en prise (13) du panneau adjacent;
c) répéter ladite étape b) afin d'obtenir une structure en forme de boîte.
